# FASCICULE DE BREVET EUROPEEN

(11) **EP 1 547 892 B1**
(45) Date de publication et mention de la délivrance du brevet: **11.04.2007**
(21) Numéro de dépôt: 04029637.8
(22) Date de dépôt: 15.12.2004
(51) Int. Cl.: B60T 13/74, B60T 7/10

(54) **Dispositif de commande électrique d'un frein de stationnement**
Elektrische Betätigungsvorrichtung für eine Feststellbremse
Electrical operating device for a parking brake

(30) Priorité: 24.12.2003 FR 0315499
(43) Date de publication de la demande: 29.06.2005
(73) Titulaire: ROBERT BOSCH GMBH, 70442 Stuttgart (DE)
(72) Inventeur: Bejot, Philippe, 75008 Paris (FR)
(74) Mandataire: Hurwic, Aleksander Wiktor

(56) Documents cités:
- EP-A- 0 710 595
- DE-A- 10 043 739
- US-A1- 2001 030 093
- US-A1- 2002 100 647

## Description

La présente invention a principalement pour objet un dispositif de commande électrique d'un frein de stationnement pour véhicule automobile.

Il est connu du document EP 0710 595B1 un dispositif de commande électrique d'un frein de stationnement pour un véhicule automobile comportant un boîtier disposé entre une première et une deuxième roues arrière du véhicule, un moteur électrique logé dans le boîtier, entraînant un arbre en rotation duquel est solidaire un pignon, une roue dentée entraînée par le pignon, la roue dentée entraînant en rotation une première et une deuxième vis sans fin s'étendant respectivement d'une première et d'une deuxième faces de la roue dentée, un premier et un deuxième écrous fixes en rotation montés sur les première et deuxième vis et se rapprochant ou s'éloignant de la roue dentée en fonction du sens de rotation de la roue dentée, un premier et un deuxième câbles montés fixes respectivement par rapport aux premier et deuxième écrous. Les câbles sont raccordées à des freins disposés au niveau des roues du véhicule automobile en passant par des orifices pratiqués dans le boîtier. Les câbles sont guidés chacun par une gaine comportant un premier arrêt de gaine en appui contre une partie fixe du frein et un deuxième arrêt de gaine en appui contre le boîtier sur la périphérie de l'orifice de passage du câble. Les freins comportent un dispositif mécanique permettant d'appliquer des plaquettes de frein contre un disque de frein solidaire d'un moyeu de la roue.

Le moteur électrique est connecté à une alimentation électrique et une commande placée au tableau de bord permet d'actionner le moteur dans un sens de rotation ou dans un autre pour freiner le véhicule en stationnement ou annuler le freinage.

Le maintien des freins est assuré par l'irréversibilité du système vis-écrou.

Lors de l'actionnement du dispositif de commande, le moteur électrique tourne dans un premier sens de rotation rapprochant les écrous l'un de l'autre, qui entraînent les câbles activant le dispositif mécanique de frein de stationnement. La gaine applique une réaction sur le câble, assurant la confirmation de l'effort en traction appliqué par le câble.

Le dispositif de commande électrique d'un frein de stationnement de l'état de la technique prévoit également un moyen d'annuler l'effort de freinage de stationnement en cas de panne par exemple électrique. Le moyen annule la réaction de la gaine sur le câble. Pour cela, il est prévu que le deuxième arrêt de gaine porté par le boîtier est amovible en cas de nécessité, par exemple au moyen d'un câble relié à une poignée facilement préhensible.

Cependant ce moyen pour annuler l'effort de freinage de stationnement nécessite une maintenance importante et complexe pour remettre le frein en état de fonctionnement. En effet, il faut qu'une personne accède au boîtier situé sous le véhicule automobile le boîtier se trouvant souvent placé dans un endroit peu accessible. De plus il faut exercer une effort important pour remettre la gaine en place afin de replacer le deuxième arrêt de gaine. Enfin, la libération du frein en stationnement nécessite également un effort important à appliquer pour enlever le deuxième arrêt de gaine.

C'est par conséquent un but de la présente invention d'offrir un dispositif de commande électrique d'un frein de stationnement permettant d'annuler l'effort de freinage en cas de défaillance de manière simple et rapide.
C'est également un but de la présente invention d'offrir un dispositif de commande électrique d'un frein de stationnement de maintenance réduite en cas de défaillance.

Ces buts sont atteints par un dispositif de commande électrique de frein de stationnement comportant un moteur électrique entraînant en rotation une roue dentée apte à exercer un effort de traction sur un premier et deuxième câbles reliés aux freins de stationnement, lesdits câbles étant guidés respectivement par une première et deuxième gaines en appui contre une partie fixe du frein de stationnement et un élément fixe du dispositif de commande, en situation de défaillance, la longueur de guidage de câble étant modifiable d'une longueur standard assurant le freinage à une longueur spécifique assurant la fin du freinage par déplacement de l'élément, la modification de la longueur de guidage de la longueur spécifique à la longueur standard étant réalisé de manière masquée.

En d'autres termes, l'élément est maintenu fixe par rapport au câble dans une position initiale par des moyens de butée tendant à se rapprocher de l'élément dans une direction radiale et aptes à être écartés dans une direction radiale manuellement pour déplacer axialement l'élément en éloignement de la gaine de guidage, annulant l'effort de freinage en stationnement, lors d'une application d'un nouvel effort de stationnement l'élément est ramené dans sa position initiale et les moyens de butée immobilisent à nouveau l'élément.

La présente invention a pricipalement pour objet un dispositif de commande électrique d'un frein de stationnement comportant un boîtier recevant un moteur électrique, au moins une roue dentée entraînée en rotation par le moteur électrique, des premières extrémités, d'un premier et un deuxième câbles, lesdites premières extrémités, des premier et deuxième câbles de frein étant aptes à se rapprocher l'une de l'autre en situation d'actionnement du frein de stationnement, lesdits premier et deuxième câbles comportant également des deuxièmes extrémités reliées au frein de stationnement disposés au niveau de roues, lesdits premier et deuxième câbles, traversant respectivement le boîtier par un premier et deuxième orifices, ledit dispositif comportant également une première et une deuxième gaines entourant respectivement le premier et deuxième câbles, lesdites gaines étant respectivement en appui à une première extrémité sur une partie fixe du frein de stationnement et à une deuxième extrémité sur un manchon de butée maintenu immobile par rapport au boîtier dans la première position, ledit manchon de butée étant susceptible d'occuper une première position fixe par rapport aux câbles, assurant le freinage de stationnement et une deuxième position annulant l'effort de freinage de stationnement du véhicule, ledit dispositif comportant des moyens d'immobilisation et de libération axiale dudit manchon de butée par rapport au boîtier et permettant le passage du manchon de butée de la première position à la deuxième position, lesdits moyens d'immobilisation étant déplaçables radialement pour faire passer le manchon de butée de la première position à la deuxième position caractérisé en ce que les moyens comportent un manchon monté immobile dans l'orifice, par rapport au boîtier et entourant le manchon de butée, un premier et un deuxième segments, entourant le manchon de butée et susceptibles de pénétrer dans une gorge pratiquée sur la surface extérieure du manchon de butée par rapprochement axial desdits segments.

La présente invention a également pour objet un dispositif de commande caractérisé en ce que lesdits premier et deuxième segments ont sensiblement la forme d'un arc de cercle, leur concavité se faisant face et sont montés en rotation par rapport au manchon par une première extrémité dans une coupelle du manchon s'étendant radialement vers l'extérieur du manchon et éloignée axialement des premières extrémités des câbles.

La présente invention a également pour objet un dispositif de caractérisé en ce que leur première extrémité comporte un ergot pénétrant dans une cavité de la coupelle.

La présente invention a également pour objet un dispositif de commande caractérisé en ce que les segments sont maintenus en rapprochement l'un de l'autre par un moyen élastique.

La présente invention a également pour objet un dispositif de commande caractérisé en ce que les segments sont éloignés l'un de l'autre de manière à s'échapper de la gorge par un moyen de déplacement comportant une platine actionnable par un manche accessible pour un conducteur.

La présente invention a également pour objet un dispositif de commande caractérisé en ce que ladite platine est montée en rotation au tour du manchon de butée et en ce qu'elle coopère avec les premier et deuxième segments par un système rampe-ergot de manière à provoquer l'éloignement radial des premier et deuxièmes segments de la gorge.

La présente invention a également pour objet un dispositif de commande caractérisé en ce qu'une première et deuxièmes rampes sensiblement en forme d'arc de cercle sont pratiquées dans la platine, lesdites rampes comportant une première extrémité radialement interne sur un premier rayon et une deuxième extrémité radialement externe sur un deuxième rayon et en ce que des premiers et deuxièmes ergots sont portés par des deuxièmes extrémités des segments.

La présente invention a également pour objet un dispositif de commande caractérisé en ce que moyen élastique est un ressort conique coaxial au manchon de butée et fixe par une première extrémité à la platine et par une deuxième extrémité à la coupelle du manchon.

La présente invention a également pour objet un dispositif de commande caractérisé en ce que les câbles sont déplaçables au moyen d'ensembles vis-écrou.

La présente invention sera mieux comprise à l'aide de la description qui va suivre et des dessins annexés sur lesquels :
- La figure 1 est une vue en coupe partielle d'un frein électrique de stationnement selon la présente invention dans une première position de repos;

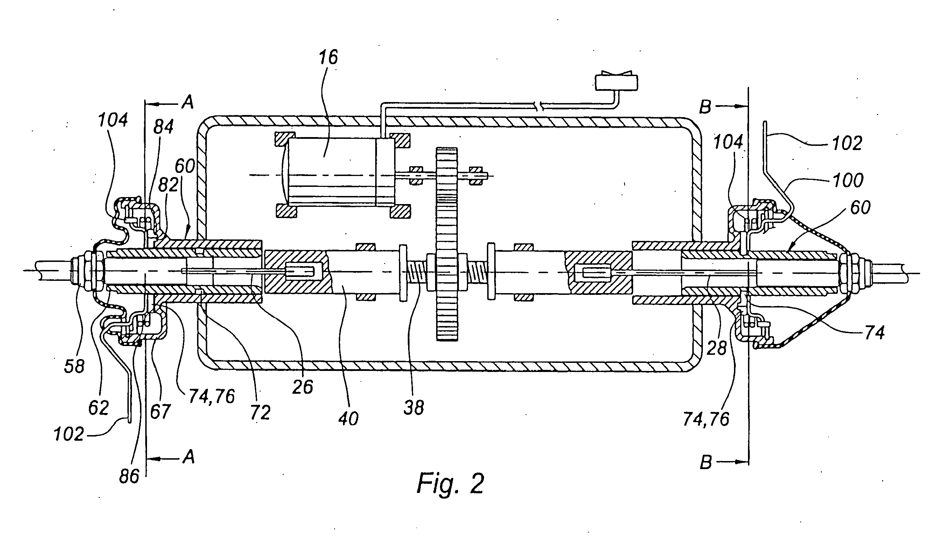

- La figure 2 est une vue en coupe partielle du frein de électrique de stationnement de la figure 1 à droite dans une deuxième position de freinage et à gauche dans une troisième position de repos ;
- La figure 3a est une vue en coupe de la figure 2 selon la plan AA ;
- La figure 3b est une vue en coupe de la figure 2 selon la plan BB.

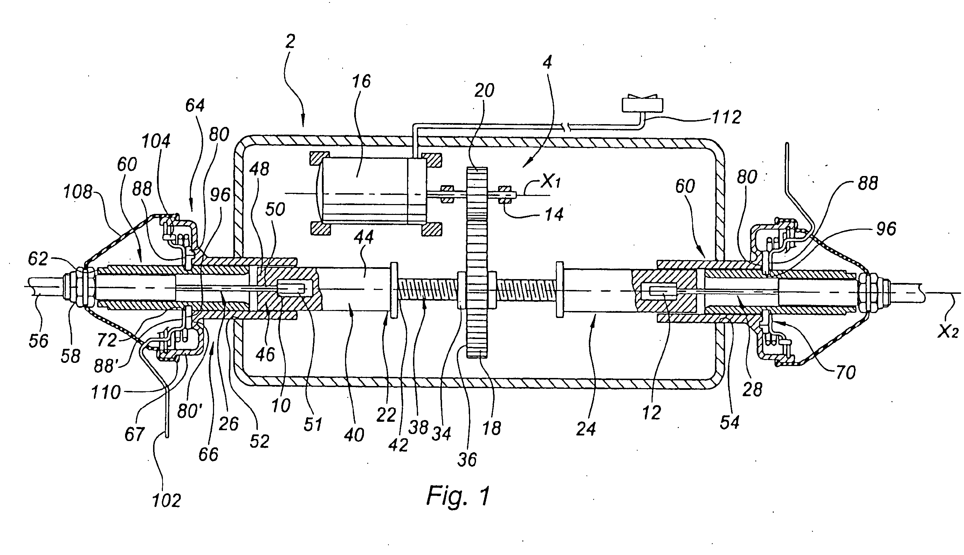

Sur la figure 1 on peut voir un frein électrique de stationnement selon la présente invention comportant un boîtier 2, un dispositif d'entraînement électrique 4 des premières extrémités 10,12 d'un premier 26 et d'un deuxième 28 câbles en éloignement de freins disposés au niveau de roues d'un véhicule automobile (non représentés).

Le dispositif 4 d'entraînement électrique comporte typiquement un moteur électrique 16 monté à l'intérieur du boîtier 2, un arbre 14 d'axe X1 entraîné en rotation par le moteur 16, un pignon monté 20 monté sur l'arbre 14, une roue dentée 18 d'axe X2 parallèle à l'axe X1 et engrainé par le pignon, un premier 22 et un deuxième 24 ensembles vis-écrou solidaires en rotation de la roue 18, auxquels sont fixées respectivement des premières extrémités 30,32 respectivement d'un premier et d'un deuxième câbles 10,12. Les câbles comportent des deuxièmes extrémités (non représentées) fixés à un dispositif de frein de stationnement (non représentés) monté dans un étrier de frein disposé au niveau d'une roue, qui lorsque le câble subit une traction applique une première et une deuxième plaquettes contre un disque de freins fixé sur un moyeu de roue.

Dans l'exemple représenté, les premier et deuxième ensembles 22,24 vis-écrou ont la même structure par conséquent nous ne décrirons en détail que le premier ensemble 22. Le premier ensemble 22 comporte une vis 38 solidaire en rotation de la roue dentée 18 par une première extrémité axiale 34 à une face 36, et un écrou 40, bloqué en rotation et libre en translation, monté autour de la vis à une deuxième extrémité axiale 42 et coopérant avec le filetage pratiqué sur la vis.

Les vis des ensembles 22,24 ont des sens d'hélices apposés de manière à ce que les écrous se rapprochent l'un de l'autre lorsque la roue est entraînée en rotation dans un premier sens et s'éloignent l'un de l'autre lorsque la roue est entraînée en rotation dans un deuxième sens.

L'écrou est porté par une première extrémité axiale 44 d'un manchon 46 dont une deuxième extrémité axiale 48 reçoit la première extrémité 10 du câble 26.
Dans l'exemple représenté la deuxième extrémité 48 du manchon comporte un alésage axial 50 pour le passage du câble 26 de diamètre sensiblement au diamètre du câble 26 et la première extrémité 10 du câble 26 comporte une noix 51 de diamètre extérieure supérieure au diamètre de l'alésage et venant en butée contre la périphérie d'une extrémité de l'alésage 50 orienté vers l'écrou.

Le boîtier 2 comporte également des premier et deuxième orifices 52,54 en regard des vis pour le passage des premier et deuxième câble 26,28.

Chaque câble 26,28 est guidé de la sortie du boîtier jusqu'à l'étrier de frein par une gaine 56 réalisé par exemple par un fil enroulé et venant en appui à une première extrémité (non représenté) sur un partie fixe de l'étrier et à une deuxième extrémité 58 sur une partie fixe du boîtier, formé par une première extrémité 62 d'un manchon 60 de butée entourant le câble 26 est immobilisé axialement par rapport au boîtier par des moyens d'immobilisation et de libération 64.
Les moyens d'immobilisation et de libération 64 comportent un manchon 66 de diamètre extérieur sensiblement égal au diamètre de l'orifice 52 pratiqué dans le boîtier et immobilisé par rapport au boîtier par tout moyen (non représenté) par exemple par sertissage ou vissage, et de diamètre intérieur sensiblement égal au diamètre extérieur du manchon de butée, formant un guide axial pour celui-ci.

Le manchon 66 comporte à une première extrémité axiale extérieure au boîtier 2 une coupelle 67 s'étendant radialement vers l'extérieur et munie de moyen de butée 70 coopérant avec la paroi extérieure du manchon de butée 60.

La paroi du manchon de butée 60 comporte une gorge 72 susceptible de coopérer avec les moyens de butées 70 formée par un premier et un deuxième segments 74,76 aptes à se rapprocher sensiblement radialement de la paroi extérieure du manchon de butée 60 pour pénétrer dans la gorge et à s'écarter sensiblement radialement de la paroi extérieure du manchon de butée 60 pour s'échapper de la gorge 72.

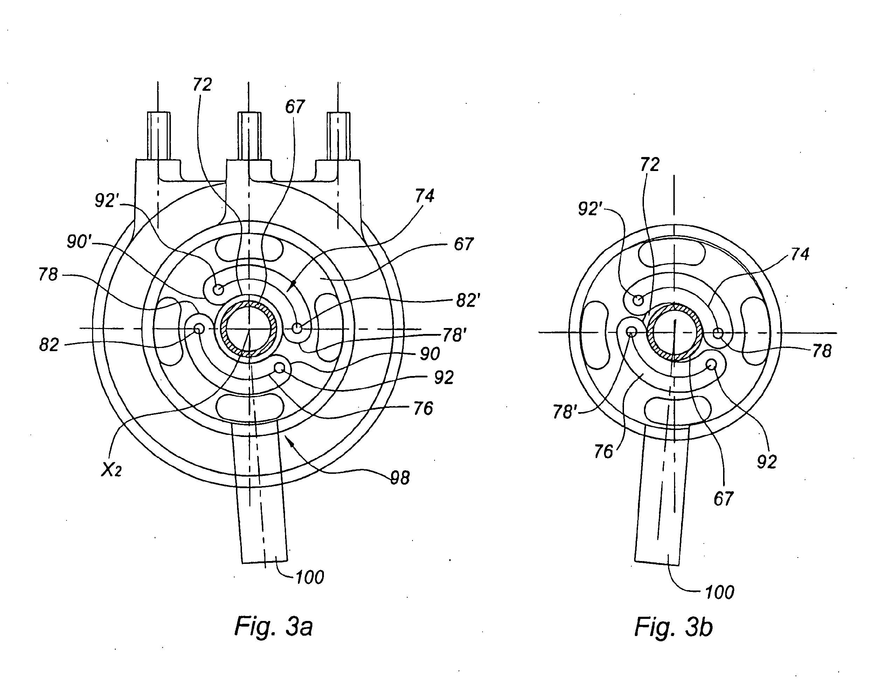

Les segments 74,76 (Figures 3a et 3b) ont sensiblement la forme d'un arc de cercle centré sur l'axe X2 et monté en rotation par une première extrémité 78,78' sur la coupelle 67. Dans l'exemple représentés, les premières extrémités 78,78' comportent sur une première face 80,80' un premier ergot 82,82' en saillie d'axe parallèle à l'axe X1 et pénétrant dans une cavité 84,84' pratiquée dans un fond 86 de la coupelle 67 de diamètre sensiblement égal au diamètre du pion 82,82'.

Les segments 74,76 comportent également sur une deuxième face 88,88' à une deuxième extrémité 90,90' opposée à la première extrémité 78, un deuxième ergot 92,92' en saillie d'axe parallèle à l'axe X2 et pénétrant dans une rampe de guidage (non visible) pratiquée dans une première face 96 d'un moyen de déplacement 98 des segments 74,76. Le moyen de déplacement 98 comporte une platine 100 entourant le manchon de butée 60 munie d'un manche 102 pour déplacer en rotation la platine 100 autour de l'axe X2. La rampe de guidage a sensiblement le forme d'un arc de cercle comportant une première extrémité radialement interne sur un premier rayon et une deuxième extrémité radialement externe sur un deuxième rayon de manière à ce que lorsque la platine tourne autour de l'axe X2, l'ergot 92,92' soit entraîné dans un mouvement de rotation autour de X2 et un mouvement en écartement de l'axe X2 provoquant une rotation du segment 76 autour de l'axe du premier ergot 82,82'.

Il est bien entendu que l'on peut prévoir de disposer la rampe sur le segment et l'ergot sur la platine.

Les segments 74,76 sont susceptibles d'avoir une première position P1 (figure 3b) proche de l'axe X2 et une deuxième position P2 (figure 3a) éloignée de l'axe X2. Lorsque les segments sont dans la première position P1, les segments pénètrent dans la gorge 72 et maintiennent immobile le manchon de butée axialement au moins en rapprochement axial de l'écrou.
Lorsque les segments sont dans la deuxième position P2, le manchon de butée 60 est libre de coulisser axialement par rapport au boîtier.

Un moyen élastique 104 de rappel de la platine 100 en position repos correspondant à la positon des segments rapprochés de l'axe X2 est disposé en appui en réaction entre la platine et le fond 86 de la coupelle 67. Dans l'exemple représenté, le moyen élastique est un ressort de torsion avantageusement conique coaxial à l'axe X2 réalisé en fil à ressort enroulé, une première extrémité 106 du fil étant plié de manière à être parallèle à l'axe X2 et à pénétrer dans un orifice pratiqué dans la platine de manière à lier le ressort 104 et la platine.

Dans l'exemple représenté, un soufflet 108 de protection, par exemple en caoutchouc est monté entre une extrémité radialement externe 110 de la coupelle et la deuxième extrémité 58 de la gaine en appui contre le manchon de butée 60 de manière à protéger le moyens de libération et d'immobilisation 64 de la poussière, des projections d'eau et de boue et également des cailloux.

Le soufflet 108 est par exemple monté par pincement.

La platine traverse le soufflet de manière à pouvoir être actionné par l'extérieur.

Le moteur électrique est connecté par un réseau électrique 112 à une source d'alimentation (non représentée), par exemple une batterie.

Le blocage en rotation de l'écrou est par exemple réalisé par des cannelures longitudinales pratiquées sur la paroi extérieure du manchon 46 coopérant avec des cannelures longitudinales pratiquées dans la paroi intérieur du manchon 66

Nous allons maintenant expliquer le fonctionnement du frein électrique de stationnement selon la présente invention.

En fonctionnement normal, lorsque le véhicule est à l'arrêt et que le conducteur veut appliquer le frein de stationnement, il appuie sur le bouton d'actionnement du frein électrique de stationnement, le moteur est alors alimenté en énergie électrique, il imprime alors un mouvement de rotation dans un premier sens de rotation à l'arbre et par la même au pignon qui entraîne la roue dentée 18.

La roue dentée entraîne à son tour en rotation la première et la deuxième vis provoquant le déplacement en translation des premiers et deuxième écrous l'un vers l'autre, les premières extrémités des câbles sont également rapprochés l'un de l'autre de manière à appliquer un effort de traction aux deuxièmes extrémités des câbles et à appliquer les plaquettes de frein sur le disque de frein. La gaine de guidage applique alors un effort de réaction au câble.

Lorsque le conducteur veut annuler l'action du frein électrique de stationnement, il appuie sur un deuxième bouton, le moteur tourne dans un deuxième sens opposé au premier sens, l'écrou s'éloignent l'un de l'autre l'effort de traction sur les câbles est relâché et les plaquettes s'éloignent du disque supprimant l'effort de freinage.

En situation de défaillance, par exemple lorsqu'il n'y a plus d'alimentation électrique, et que l'on souhaite annuler le frein de stationnement, le conducteur tire sur la platine de manière à la faire tourner autour de l'axe X2 dans un premier sens, appliquant un couple opposé au couple appliqué par le ressort de torsion 104, provoquant l'éloignement radial des premier et deuxième segments de l'axe X2 qui échappent alors à la gorge 72. Le manchon de butée 60 n'est alors plus maintenu axialement et coulisse axialement en direction de la roue dentée sous l'effort d'actionnement de la réaction de la gaine, annulant la réaction de la gaine sur le câble. La longueur de guidage du câble sous tension est alors réduite qui provoque une détente du câble. L'effort de freinage est alors supprimer.

Lorsque la cause de la défaillance est déterminée et supprimée, par exemple la batterie est rechargée ou remplacée, le conducteur peut à nouveau utiliser son frein électrique de stationnement. En effet, il est prévu au niveau d'un calculateur central ayant enregistré la défaillance, une routine prévoyant de faire tournée le moteur dans le deuxième sens de manière à éloigner l'un de l'autre les écrous, le manchon portant les écrous vient alors repoussé le manchon de butée, et du fait de l'effort permanent exercé par le ressort de torsion sur la platine, ceux-ci pénètrent automatiquement dans la gorge lorsque la gorge 72 pratiquée dans la paroi extérieure du manchon de butée arrive au droit des segments et maintiennent alors de nouveau axialement le manchon de butée. Le frein électrique de stationnement est de nouveau prêt à fonctionner.

On peut également prévoir que le calculateur envoie l'ordre au préalable de faire tourner le moteur dans le deuxième sens d'éloignement des écrous pour immobiliser à nouveau le manchon de butée axialement. au moment où le conducteur veut à nouveau utiliser le frein de stationnement.

Il est bien entendu que l'on peut également prévoir d'autres moyens d'immobilisation et de libération, l'immobilisation du manchon de butée étant réalisée par serrage au moyen d'un anneau maintenu en arc-boutement sur le manchon, par un moyen élastique radialement.

Le dispositif selon l'invention est disposé sur chacun des câbles du frein de parc.

Il est bien entendu que l'on peut prévoir d'actionner la platine de libération du frein de parc au moyen d'un câble relié à un levier disposé dans le compartiment moteur.

On a bien réalisé un frein électrique de stationnement nécessitant une maintenance réduite en cas de défaillance.

La présente invention s'applique notamment à l'industrie du freinage pour véhicule automobile et notamment à l'industrie du freinage pour voiture particulière.

## Revendications

1. Dispositif de commande électrique d'un frein de stationnement comportant un boîtier (2) recevant un moteur électrique (4), au moins une roue dentée (18) entraînée en rotation par le moteur électrique (4), des premières extrémités (30,32) d'un premier et un deuxième câbles (26,28), lesdites premières extrémités (30,32) des premier et deuxième câbles de frein étant aptes à se rapprocher l'une de l'autre en situation d'actionnement du frein de stationnement, lesdits premier et deuxième câbles comportant également des deuxièmes extrémités reliées au frein de stationnement disposés au niveau de roues, lesdits premier et deuxième câbles (26,28) traversant respectivement le boîtier par un premier et deuxième orifices (52,54), ledit dispositif comportant également une première et une deuxième gaines (56) entourant respectivement le premier et deuxième câbles (26,28), lesdites gaines (56) étant respectivement en appui à une première extrémité sur une partie fixe du frein de stationnement et à une deuxième extrémité (58) sur un manchon (60) de butée maintenu immobile par rapport au boîtier (2) dans la première position, ledit manchon de butée (60) étant susceptible d'occuper une première position fixe par rapport aux câbles (26,28) assurant le freinage de stationnement et une deuxième position annulant l'effort de freinage de stationnement du véhicule, ledit dispositif comportant des moyens d'immobilisation et de libération (64) axiale dudit manchon de butée (60) par rapport au boîtier (2) et permettant le passage du manchon de butée (60) de la première position à la deuxième position, lesdits moyens d'immobilisation étant déplaçables radialement pour faire passer le manchon de butée (60) de la première position à la deuxième position **caractérisé en ce que** les moyens (64) comportent un manchon (66) monté immobile dans l'orifice (52,54) par rapport au boîtier (2) et entourant le manchon de butée (60), un premier et un deuxième segments (74,76) entourant le manchon de butée (60) et susceptibles de pénétrer dans une gorge (72) pratiquée sur la surface extérieure du manchon de butée (60) par rapprochement axial desdits segments.

2. Dispositif de commande selon la revendication précédente **caractérisé en ce que** lesdits premier et deuxième segments (74,76) ont sensiblement la forme d'un arc de cercle, leur concavité se faisant face et sont montés en rotation par rapport au manchon (66) par une première extrémité (78,78') dans une coupelle (67) du manchon (66) s'étendant radialement vers l'extérieur du manchon (66) et éloignée axialement des premières extrémités des câbles.

3. Dispositif de commande selon la revendication précédente **caractérisé en ce que** leur première extrémité (78,78') comporte un ergot (82,82') pénétrant dans une cavité (84,84') de la coupelle (67).

4. Dispositif de commande selon la revendication précédente **caractérisé en ce que** les segments (74,76) sont maintenus en rapprochement l'un de l'autre par un moyen élastique (104).

5. Dispositif de commande selon la revendication précédente **caractérisé en ce que** les segments sont éloignés l'un de l'autre de manière à s'échapper de la gorge (72) par un moyen de déplacement (98) comportant une platine (100) actionnable par un manche (102) accessible pour à conducteur.

6. Dispositif de commande selon la revendication précédente **caractérisé en ce que** ladite platine (100) est montée en rotation au tour du manchon de butée (60) et **en ce qu'**elle coopère avec les premier et deuxième segments par un système rampe-ergot (92,92') de manière à provoquer l'éloignement radial des premier et deuxièmes segments de la gorge (72).

7. Dispositif de commande selon la revendication précédente **caractérisé en ce qu**'une première et deuxièmes rampes sensiblement en forme d'arc de cercle sont pratiquées dans la platine (100), lesdites rampes comportant une première extrémité radialement interne sur un premier rayon et une deuxième extrémité radialement externe sur un deuxième rayon et en ce que des premiers et deuxièmes ergots (92,92') sont portés par des deuxièmes extrémités des segments (74,76).

8. Dispositif de commande selon la revendication 4 à 7 **caractérisé en ce que** le moyen élastique (104) est un ressort conique coaxial au manchon de butée (60) et fixe par une première extrémité à la platine et par une deuxième extrémité à la coupelle du manchon (66).

9. Dispositif de commande selon l'une quelconque des revendications précédentes **caractérisé en ce que** les câbles sont déplaçables au moyen d'ensembles vis-écrou (22,24).

## Claims

1. Electrical operating device for a parking brake comprising a housing (2) receiving an electric motor (4), at least one toothed wheel (18) rotated by the electric motor (4), first ends (30, 32) of a first and second cable (26, 28), the said first ends (30, 32) of the first and second brake cables being able to approach one another in a situation in which the parking brake is actuated, the said first and second cables also comprising second ends connected to the parking brake that are located at the wheels, the said first and second cables (26, 28) respectively passing through the housing via first and second orifices (52, 54), the said device also comprising first and second sheaths (56) respectively surrounding the first and second cables (26, 28), the said sheaths (56) bearing respectively at a first end on a fixed part of the parking brake and at a second end (58) on a stop sleeve (60) maintained immovably with respect to the housing (2) in the first position, the said stop sleeve (60) being able to occupy a first fixed position with respect to the cables (26, 28), ensuring the parking braking, and a second position cancelling the parking braking force of the vehicle, the said device comprising means (64) for axially immobilizing and releasing the said stop sleeve (60) with respect to the housing (2) and allowing the stop sleeve (60) to pass from the first position to the second position, the said immobilization means being able to be shifted radially in order to pass the stop sleeve (60) from the first position to the second position, **characterized in that** the means (64) comprise a sleeve (60) mounted immovably in the orifice (52, 54) with respect to the housing (2) and surrounding the stop sleeve (60), first and second segments (74, 76) surrounding the stop sleeve (60) and being able to enter a groove (72) made in the outer surface of the stop sleeve (60) by bringing the said segments together axially.

2. Operating device according to the preceding claim, **characterized in that** the said first and second segments (74, 76) have substantially the shape of an arc of a circle, their concavities facing one another, and are rotationally mounted with respect to the sleeve (66) by a first end (78, 78') in a cup (67) of the sleeve (66), this cup extending radially towards the outside of the sleeve (66) and being spaced axially from the first ends of the cables.

3. Operating device according to the preceding claim, **characterized in that** their first end (78, 78') comprises a peg (82, 82') entering a cavity (84, 84') in the cup (67).

4. Operating device according to the preceding claim, **characterized in that** the segments (74, 76) are maintained drawn towards one another by an elastic means (104).

5. Operating device according to the preceding claim, **characterized in that** the segments are separated from one another so as to escape from the groove (72) by a shifting means (98) comprising a plate (100) which can be actuated by a handle (102) accessible to a driver.

6. Operating device according to the preceding claim, **characterized in that** the said plate (100) is rotationally mounted around the stop sleeve (60), and **in that** it cooperates with the first and second segments by a system consisting of a ramp and pegs (92, 92') so as to radially separate the first and second segments from the groove (72).

7. Operating device according to the preceding claim, **characterized in that** the first and second ramps substantially in the shape of an arc of a circle are made in the plate (100), the said ramps comprising a radially internal first end on a first radius and a radially external second end on a second radius, and **in that** the first and second pegs (92, 92') are borne by second ends of the segments (74, 76).

8. Operating device according to Claims 4 to 7, **characterized in that** the elastic means (104) is a conical spring coaxial with the stop sleeve (60) and fixed by a first end to the plate and by a second end to the cup of the sleeve (66).

9. Operating device according to any one of the preceding claims, **characterized in that** the cables can be shifted by means of screw/nut assemblies (22, 24).

## Patentansprüche

1. Vorrichtung zur elektrischen Steuerung einer Feststellbremse mit einem Gehäuse (2), das einen Elektromotor (4) aufnimmt, mindestens einem Zahnrad (18), das von dem Elektromotor (4) in Drehung versetzt wird, ersten Enden (30, 32) eines ersten und eines zweiten Seils (26, 28), wobei die ersten Enden (30, 32) des ersten und zweiten Bremsseils sich bei der Betätigung der Feststellbremse aneinander nähern können, wobei das erste und das zweite Seil auch zweite Enden aufweisen, die mit der auf Höhe der Räder angeordneten Feststellbremse verbunden sind, wobei das erste und das zweite Seil (26, 28) das Gehäuse durch eine erste bzw. eine zweite Öffnung (52, 54) durchqueren, wobei die Vorrichtung auch eine erste und eine zweite Umhüllung (56) aufweist, die das erste bzw. das zweite Seil (26, 28) umgeben, wobei die Umhüllungen (56) jeweils an einem ersten Ende an einem festen Teil der Feststellbremse und an einem zweiten Ende (58) an einer Anschlaghülse (60) anliegen, welche in der ersten Position bezüglich des Gehäuses (2) blockiert gehalten ist, wobei die Anschlaghülse (60) bezüglich der Seile (26, 28) eine erste, feste Position, in der die Feststellbremsung gewährleistet ist, und eine zweite Position einnehmen kann, in der die Kraft der Feststellbremsung des Fahrzeugs beseitigt wird, wobei die Vorrichtung Mittel (64) zur axialen Blockierung und Freigabe der Anschlaghülse (60) bezüglich des Gehäuses (2) aufweist, mittels denen sich die Anschlaghülse (60) von der ersten Position in die zweite Position bewegen kann, wobei die Blockierungsmittel radial versetzt werden können, damit sich die Anschlaghülse (60) von der ersten Position in die zweite Position bewegt, **dadurch gekennzeichnet, dass** die Mittel (64) eine Hülse (66) aufweisen, die in der Öffnung (52, 54) bezüglich des Gehäuses (2) feststehend angebracht ist und die Anschlaghülse (60) umgibt, wobei ein erstes und ein zweites Segment (74, 76) die Anschlaghülse (60) umgeben und durch axiale Annäherung der Segmente in eine Nut (72) eindringen können, die an der Außenfläche der Anschlaghülse (60) ausgebildet ist.

2. Steuervorrichtung nach dem vorhergehenden Anspruch, **dadurch gekennzeichnet, dass** das erste und das zweite Segment (74, 76) im Wesentlichen kreisbogenförmig sind, wobei ihre Konkavitäten einander zugewandt sind, und sie über ein erstes Ende (78, 78') in einer Schale (67) der Hülse (66), die sich radial zum Äußeren der Hülse (66) erstreckt und axial von den ersten Enden der Seile beabstandet ist, bezüglich der Hülse (66) drehbar angebracht sind.

3. Steuervorrichtung nach dem vorhergehenden Anspruch, **dadurch gekennzeichnet, dass** das erste Ende (78, 78') eine Nase (82, 82') aufweist, die in eine Vertiefung (84, 84') der Schale (67) eindringt.

4. Steuervorrichtung nach dem vorhergehenden Anspruch, **dadurch gekennzeichnet, dass** die Segmente (74, 76) durch ein elastisches Mittel (104) so gehalten sind, dass sie einander angenähert sind.

5. Steuervorrichtung nach dem vorhergehenden Anspruch, **dadurch gekennzeichnet, dass** ein Verlagerungsmittel (98) mit einer Platine (100), die über einen Hebel (102) betätigt werden kann, der für einen Fahrer zugänglich ist, die Segmente so auseinanderrückt, dass sie aus der Nut (72) gelöst sind.

6. Steuervorrichtung nach dem vorhergehenden Anspruch, **dadurch gekennzeichnet, dass** die Platine (100) um die Anschlaghülse (60) herum drehbar angebracht ist und über ein System (92, 92') mit Rampe und Nase mit dem ersten und dem zweiten Segment so zusammenwirkt, dass das radiale Wegrücken des ersten und zweiten Segments von der Nut (72) bewirkt wird.

7. Steuervorrichtung nach dem vorhergehenden Anspruch, **dadurch gekennzeichnet, dass** eine erste und eine zweite Rampe, die im Wesentlichen kreisbogenförmig sind, in der Platine (100) ausgebildet sind, wobei die Rampen ein erstes, radial inneres Ende auf einem ersten Radius und ein zweites, radial äußeres Ende auf einem zweiten Radius aufweisen, und dass erste und zweite Nasen (92, 92') von zweiten Enden der Segmente (74, 76) getragen sind.

8. Steuervorrichtung nach den Ansprüchen 4 bis 7, **dadurch gekennzeichnet, dass** das elastische Mittel (104) eine konische Feder ist, die koaxial zur Anschlaghülse (60) verläuft und über ein erstes Ende an der Platine und über ein zweites Ende an der Schale der Hülse (66) befestigt ist.

9. Steuervorrichtung nach einem der vorhergehenden Ansprüche, **dadurch gekennzeichnet, dass** die Seile über Schraube-Mutter-Baugruppen (22, 24) verlagert werden können.
